# EUROPEAN PATENT APPLICATION

(11) **EP 4 342 606 A1**
(43) Date of publication of application: **27.03.2024**
(21) Application number: 22804545.6
(22) Date of filing: 09.05.2022
(51) Int. Cl.: B23B 25/06, B23B 3/30, B23B 13/04, B23B 15/00, B23Q 15/24, B23Q 17/09, G05B 19/4062

(54) **MACHINE TOOL AND METHOD FOR CONTROLLING MACHINE TOOL**

(30) Priority: 20.05.2021 JP 2021085308
(71) Applicant: Star Micronics Co., Ltd., Shizuoka-shi, Shizuoka 422-8654 (JP)
(72) Inventor: SHIGAMA, Koichiro, Shizuoka-shi, Shizuoka 422-8654 (JP); IKEGAYA, Takeshi, Shizuoka-shi, Shizuoka 422-8654 (JP)
(74) Representative: Grünecker Patent- und Rechtsanwälte PartG mbB
(86) International application number: PCT/JP2022/019626
(87) International publication number: WO 2022/244631

(57) **Abstract**

Provided is a machine tool and a method for controlling the machine tool capable of precisely determine a success or a failure of a cut-off. An NC lathe 1 includes a first spindle 31 capable of moving in an axis direction thereof and a second spindle 61 capable of moving to a position facing the first spindle 31. The NC lathe 1 performs a cut-off of a workpiece W gripped by the first spindle 31 and the second spindle 61 and then performs a separation movement of the second spindle 61 in a direction separating from the first spindle 31. The NC lathe 1 further includes a movement controlling unit 211 adapted to perform a stop control of the first spindle 31 at a command position of the first spindle 31 during the separation movement of the second spindle 61 and a cut-off success or failure determining unit 213 adapted to monitor a positional deviation of the first spindle 31 during the separation movement of the second spindle 61 to determine a success or a failure of the cut-off, the positional deviation being a difference between the command position and an actual position of the first spindle 31.

## Description

### TECHNICAL FIELD

The present invention relates to a machine tool provided with a first spindle capable of moving in an axis direction thereof and a second spindle capable of moving to a position facing the first spindle, performing a cut-off of a workpiece gripped by the first spindle and the second spindle, and then performing a separation movement of the second spindle in a direction separating from the first spindle. The invention further relates to a method for controlling a machine tool provided with a first spindle capable of moving in an axis direction thereof and a second spindle capable of moving to a position facing the first spindle and moving in a direction separating from the first spindle.

### BACKGROUND ART

There is a known machine tool provided with a first spindle and a second spindle facing the first spindle and configured to perform a cut-off of a workpiece gripped by the first spindle and the second spindle (see PTL 1, for example). The machine tool described in PTL 1 executes a separation movement of the second spindle in a direction away from the first spindle after performing the cut-off, and determines whether the cut-off is successful according to whether a positional deviation of the second spindle during the separation movement exceeds a predetermined threshold.

### PRIOR ART DOCUMENT

### PATENT DOCUMENT

PTL 1: JP2670955B

### SUMMARY

### TECHNICAL PROBLEM

However, since the machine tool described in PTL 1 monitors the positional deviation of the second spindle that is moving in the direction separating from the first spindle, a minute positional deviation occurs along with the movement even when the cut off is successful. In addition, in some of machine tools, frictional load and the like may vary with the movement of the second spindle to cause a further positional deviation. The threshold for determination may be set larger in consideration of occurrence of such positional deviation. It would, however, produce a risk of determination error that cannot determine a failure when the cut off is unsuccessful.

The present invention provides a machine tool and a method for controlling the machine tool capable of precisely determine a success or a failure of the cut-off.

### SOLUTION TO PROBLEM

A machine tool according to the invention includes a first spindle capable of moving in an axis direction thereof and a second spindle capable of moving to a position facing the first spindle, the machine tool capable of performing a cut-off of a workpiece gripped by the first spindle and the second spindle and then performing a separation movement of the second spindle in a direction separating from the first spindle, the machine tool comprising:
a movement controlling unit adapted to perform a stop control of the first spindle at a command position of the first spindle during the separation movement of the second spindle; and
a cut-off success or failure determining unit adapted to monitor a positional deviation of the first spindle during the separation movement of the second spindle to determine a success or a failure of the cut-off, the positional deviation being a difference between the command position and an actual position of the first spindle.

The machine tool of the invention determines a success or a failure of the cut-off according to the positional deviation of the first spindle that would not move irrespective of the movement of the second spindle when the cut-off is successfully done. Thus, it is possible to determine whether the cut-off is successful more precisely as compared to the conventional determination according to the positional deviation of the second spindle.

Here, the direction in which the second spindle separating from the first spindle may be a direction along the axis direction of the first spindle. In addition, the separation movement may be executed in a state where the first spindle grips one portion of the workpiece and the second spindle grips the other portion of the workpiece severed by the cut-off. The machine tool may further include a positional deviation acquiring unit that acquires the positional deviation. In addition, the positional deviation acquiring unit may acquire the positional deviation according to an output from an encoder of a motor for moving the second spindle in the separation direction. The machine tool may further include a display unit that displays an alert message when the cut-off success or failure determining unit determines a failure of the cut-off.

In the machine tool of the invention, the cut-off success or failure determining unit determines a failure of the cut-off when an amount of difference of the positional deviation from a reference deviation exceeds a predetermined amount, the reference deviation being the positional deviation of the first spindle immediately before the separation movement of the second spindle.

This can exclude an influence of the positional deviation that might occur immediately before the separation movement, and thus makes it possible to more precisely determine whether the cut-off is successful.

A method for controlling a machine tool of the invention provided with a first spindle capable of moving in an axis direction thereof and a second spindle capable of moving to a position facing the first spindle to grip a workpiece and moving in a direction separating from the first spindle, the method comprising:
performing a cut-off of the workpiece gripped by the first spindle and the second spindle;
performing a stop control of the first spindle at a command position after the cut-off and then performing a separation movement of the second spindle in the direction separating from the first spindle; and
monitoring a positional deviation of the first spindle during the separation movement of the second spindle and determining a success or a failure of the cut off according to the positional deviation, the positional deviation being a difference between the command position and an actual position of the first spindle.

According to the method for controlling a machine tool, the machine tool determines a success or a failure of the cut-off according to the positional deviation of the first spindle that would not move irrespective of the movement of the second spindle when the cut-off is successfully done. Thus, it is possible to determine whether the cut-off is successful more precisely.

The method further includes a grip force preliminarily determining step to be executed before performing the cut-off. The grip force preliminarily determining step includes stopping the first spindle and moving the second spindle in the direction separating from the first spindle while gripping the workpiece by the first spindle and the second spindle, monitoring another positional deviation of the first spindle, and determining whether or not a grip force of the second spindle is sufficient according to the positional deviation.

By executing the grip force preliminarily determining step, it is possible to easily check whether the force of the second spindle for gripping the workpiece is set at a grip force adequate enough to determine whether the cut off is successful in the cut-off success or failure determining step.

Here, the separation movement of the second spindle may be performed while gripping the second spindle by the grip force preliminarily determined to be sufficient.

### ADVANTAGEOUS EFFECTS OF INVENTION

According to the present invention, it is possible to provide a machine tool and a method for controlling the machine tool capable of precisely determine whether cut-off is successful.

### BRIEF DESCRIPTION OF THE DRAWINGS

FIG. 1 is a front view illustrating the external appearance of an NC lathe according to this embodiment.
FIG. 2 is a plan view schematically illustrating an internal configuration of the NC lathe illustrated in FIG. 1.
FIG. 3 is a block diagram illustrating a hardware configuration of the NC lathe illustrated in FIG. 1.
FIG. 4 is a functional block diagram illustrating a functional configuration of a control apparatus illustrated in FIG. 3.
FIG. 5 is a flowchart illustrating an operation related to a cut-off processing of the NC lathe illustrated in FIG. 1.
FIG. 6 is a flowchart illustrating an operation related to a test cut-off processing of the NC lathe illustrated in FIG. 1.

### DETAILED DESCRIPTION

An embodiment of the present invention will be described below with reference to the drawings. In this embodiment, a description will be given by using an example in which the present invention is applied to a Numerical Control (NC) lathe.

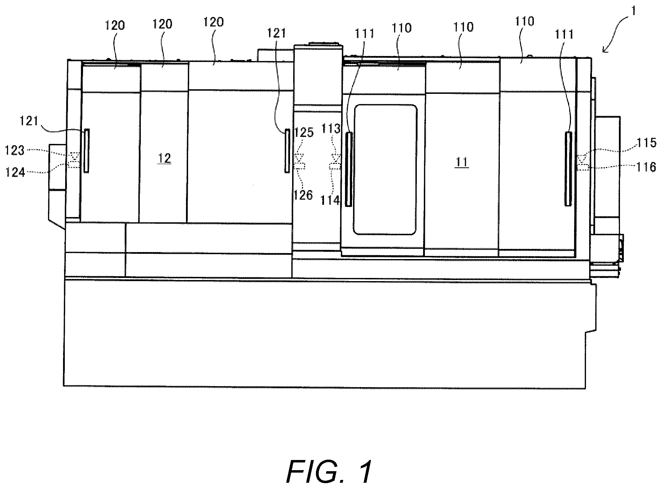

FIG. 1 is a front view illustrating the external appearance of an NC lathe according to this embodiment. Note that, in FIG. 1, an operation unit and a display unit are not illustrated.

As illustrated in FIG. 1, an NC lathe 1 includes: a machining chamber 11 that is formed on its leg; and a headstock chamber 12. This NC lathe 1 corresponds to an example of a machine tool. The machining chamber 11 is disposed on the right side of the NC lathe 1 as seen from the front side of the NC lathe 1. Hereinbelow, in the description using FIG. 1, the right side of the NC lathe 1 as seen from the front side of the NC lathe 1 is simply referred to as the right side, and the left side of the NC lathe 1 as seen from the front side thereof is simply referred to as the left side. Three sliding-door-type machining chamber doors 110 are arranged on the front side of the machining chamber 11. FIG. 1 illustrates a state where the machining chamber 11 is closed by the three machining chamber doors 110. These three machining chamber doors 110 are interlocking doors that move in conjunction with each other. A machining door handle 111 is attached to each of the machining chamber doors 110 arranged on the left and right sides.

As a user of the NC lathe 1 holds the left-side machining door handle 111 and slides its corresponding machining chamber door 110 to the right side, the central machining chamber door 110 also slides to the right side in conjunction thereto little by little. This can open approximately two-thirds of the machining chamber 11 on the left side at most. Likewise, as the user of the NC lathe 1 holds the right-side machining door handle 111 and slides its corresponding machining chamber door 110 to the left side, the central machining chamber door 110 also slides to the left side in conjunction thereto little by little. This can open approximately two-thirds of the machining chamber 11 on the right side at most. Alternatively, by sliding both the right-side machining chamber door 110 and the left-side machining chamber door 110 toward the central machining chamber door 110 at the same time, it is possible to open approximately one-third of the machining chamber 11 on each of the left and right sides.

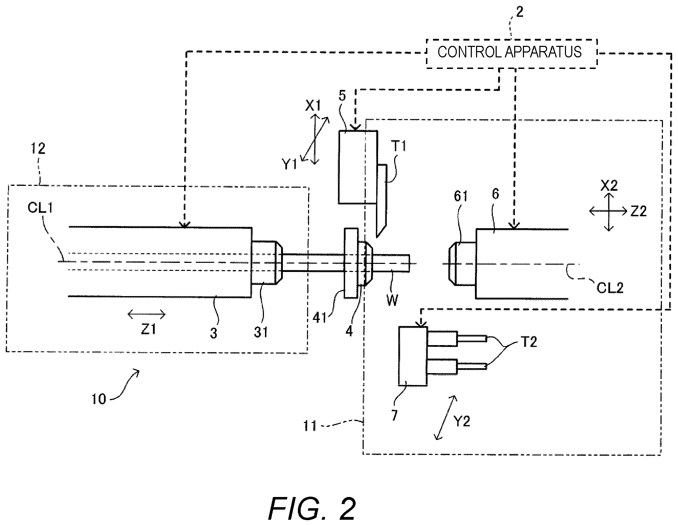

A first door sensor 113 and a first door locking device 114 are arranged in the NC lathe 1 in a portion leftward of the machining chamber 11. The first door sensor 113 is configured to detect whether the left-side machining chamber door 110 is at a closed position. In addition, the first door locking device 114 is configured to lock the left-side machining chamber door 110, located at its closed position, at this closed position in response to a command from a control apparatus 2 (see FIG. 2) to be described later. Meanwhile, a second door sensor 115 and a second door locking device 116 are arranged in the NC lathe 1 in a portion rightward of the machining chamber 11. The second door sensor 115 is configured to detect whether the right-side machining chamber door 110 is at a closed position. In addition, the second door locking device 116 is configured to lock the right-side machining chamber door 110, located at its closed position, at this closed position in response to a command from the control apparatus 2. Note that, the first door sensor 113 and the first door locking device 114 may be an integrated unit. Likewise, the second door sensor 115 and the second door locking device 116 may be an integrated unit.

The control apparatus 2 (see FIG. 2) is configured to control operations of the first door locking device 114 and the second door locking device 116 based on outputs from the first door sensor 113 and the second door sensor 115. Specifically, in a case where both the first door sensor 113 and the second door sensor 115 output signals indicating that the corresponding doors are at their closed positions, the control apparatus 2 sets the first door locking device 114 and the second door locking device 116 to an unlocked state. In other words, in a state where the machining chamber 11 is closed by the three machining chamber doors 110, the left and right machining chamber doors 110 are slidable in their open directions. However, since the first door locking device 114 and the second door locking device 116 also function as a door interlock, while a machining unit 10 (see FIG. 2) of the NC lathe 1 is operating, the left and right machining chamber doors 110 are locked with the three machining chamber doors 110 located at their closed positions. In addition, in a case where both the first door sensor 113 and the second door sensor 115 output signals indicating that the corresponding doors are not at their closed positions, the control apparatus 2 also sets the first door locking device 114 and the second door locking device 116 to an unlocked state. Thus, in a state where both the left and right sides of the machining chamber 11 are open, the left and right machining chamber doors 110 are movable to their closed positions.

On the other hand, in a case where one of the first door sensor 113 and the second door sensor 115 outputs a signal indicating that the corresponding door is at its closed position and the other sensor outputs a signal indicating that the corresponding door is not at its closed position, the control apparatus 2 controls the first door locking device 114 or the second door locking device 116 to lock the machining chamber door 110 located at its closed position after a predetermined period elapses since such a combination of signal outputs is observed. Note that, the predetermined period is one second, for example, but may be other than one second or may be settable at any period. Note that, in a case where both the first door sensor 113 and the second door sensor 115 output signals indicating that the corresponding doors are in the same state (an open or closed state) within the predetermined period since the start of output of the above signals, the control apparatus 2 keeps the first door locking device 114 and the second door locking device 116 in an unlocked state.

In a state where one of the left and right machining chamber doors 110 is closed and the other door is open, if the other door is closed with great force, this great force is transmitted to the one of the machining chamber doors 110 that is in conjunction with the other door via the central machining chamber door 110, which may open the one of the machining chamber doors 110 in the closed state. In a state where one of the left and right machining chamber doors 110 is closed and the other door is open, even if the other machining chamber door 110 is closed with great force, it is possible to reliably prevent the one of the machining chamber doors 110 from being opened unexpectedly by locking the one of the machining chamber doors 110 as in this embodiment.

The headstock chamber 12 is disposed on the left side of the NC lathe 1. Three sliding-door-type headstock chamber doors 120 are arranged on the front side of the headstock chamber 12. FIG. 1 illustrates a state where the headstock chamber 12 is closed by the three headstock chamber doors 120. These three headstock chamber doors 120 are interlocking doors that move in conjunction with each other. A spindle door handle 121 is attached to each of the headstock chamber doors 120 arranged on the left and right sides. The operation of the headstock chamber doors 120 in closing and opening of the headstock chamber doors 120 is the same as that of the machining chamber doors 110, and thus will not be described in detail.

A third door sensor 123 and a third door locking device 124 are arranged in the NC lathe 1 in a portion leftward of the headstock chamber 12. The third door sensor 123 is configured to detect whether the left-side headstock chamber door 120 is at a closed position. In addition, the third door locking device 124 is configured to lock the left-side headstock chamber door 120, located at its closed position, at this closed position in response to a command from the control apparatus 2 (see FIG. 2). Meanwhile, a fourth door sensor 125 and a fourth door locking device 126 are arranged in the NC lathe 1 in a portion rightward of the headstock chamber 12. The fourth door sensor 125 is configured to detect whether the right-side headstock chamber door 120 is at a closed position. In addition, the fourth door locking device 126 is configured to lock the right-side headstock chamber door 120, located at its closed position, at this closed position in response to a command from the control apparatus 2. Note that, the third door sensor 123 and the third door locking device 124 may be an integrated unit. Likewise, the fourth door sensor 125 and the fourth door locking device 126 may be an integrated unit.

The control apparatus 2 (see FIG. 2) is configured to control operations of the third door locking device 124 and the fourth door locking device 126 based on outputs from the third door sensor 123 and the fourth door sensor 125. Specifically, in a case where both the third door sensor 123 and the fourth door sensor 125 output signals indicating that the corresponding doors are at their closed positions, the control apparatus 2 sets the third door locking device 124 and the fourth door locking device 126 to an unlocked state. In other words, in a state where the headstock chamber 12 is closed by the three headstock chamber doors 120, the left and right headstock chamber doors 120 are slidable in their open directions. However, since the third door locking device 124 and the fourth door locking device 126 also function as a door interlock, while the machining unit 10 (see FIG. 2) of the NC lathe 1 is operating, the left and right headstock chamber doors 120 are locked with the three headstock chamber doors 120 located at their closed positions. Note that, in a case where at least one of the first door sensor 113, the second door sensor 115, the third door sensor 123, and the fourth door sensor 125 outputs a signal indicating that the corresponding machining chamber doors 110 or headstock chamber doors 120 are not at their closed positions, the control apparatus 2 does not permit the machining unit 10 of the NC lathe 1 to operate. In addition, in a case where both the third door sensor 123 and the fourth door sensor 125 output signals indicating that the corresponding doors are not at their closed positions, the control apparatus 2 also sets the third door locking device 124 and the fourth door locking device 126 to an unlocked state. Thus, in a state where both the left and right sides of the headstock chamber 12 are open, the left and right headstock chamber doors 120 are movable to their closed positions.

On the other hand, in a case where one of the third door sensor 123 and the fourth door sensor 125 outputs a signal indicating that the corresponding door is at its closed position and the other sensor outputs a signal indicating that the corresponding door is not at its closed position, the control apparatus 2 causes the third door locking device 124 or the fourth door locking device 126 to lock the headstock chamber door 120 located at its closed position after a predetermined period passes since such a combination of signal outputs is observed. Note that, the predetermined period is one second, for example, but may be other than one second or may be settable at any period. Note that, in a case where both the third door sensor 123 and the fourth door sensor 125 output signals indicating that the corresponding doors are in the same state (an open or closed state) within the predetermined period since the start of output of the above signals, the control apparatus 2 keeps the third door locking device 124 and the fourth door locking device 126 in an unlocked state.

In a state where one of the left and right headstock chamber doors 120 is closed and the other door is open, if the other door is closed with great force, this great force is transmitted to the one of the headstock chamber doors 120 that is in conjunction with the other door via the central headstock chamber door 120, which may open the one of the headstock chamber doors 120 in the closed state. In a state where one of the left and right headstock chamber doors 120 is closed and the other door is open, even if the other headstock chamber door 120 is closed with great force, it is possible to reliably prevent the one of the headstock chamber doors 120 from being opened unexpectedly by locking the one of the headstock chamber doors 120 as in this embodiment.

FIG. 2 is a plan view schematically illustrating the machining unit of the NC lathe illustrated in FIG. 1. In addition, the control apparatus 2 is also illustrated in FIG. 2. Further, in FIG. 2, ranges of the machining chamber 11 and the headstock chamber 12 are respectively illustrated by thin chain double-dashed lines.

The machining unit 10 is formed inside the NC lathe 1. As illustrated in FIG. 2, the machining unit 10 includes: a first headstock 3; a guide bush 4; a first tool post 5; a second headstock 6; and a second tool post 7. The operation of the machining unit 10 is controlled by the control apparatus 2. The control apparatus 2 stores therein information such as an NC program and operation information associated with various commands used in this NC program. The control apparatus 2 is a computer that numerically controls the first headstock 3, the first tool post 5, the second headstock 6, and the second tool post 7 according to the NC program. The control apparatus 2 also controls the rotation of a first spindle 31 and a second spindle 61. In addition, in a case where rotary tools are attached to the first tool post 5 and the second tool post 7, the control apparatus 2 also controls the rotation of these rotary tools.

The first spindle 31 is mounted on the first headstock 3. The first headstock 3 is movable in a Z1-axis direction together with the first spindle 31. The first headstock 3 and the first spindle 31 are arranged in the headstock chamber 12. The Z1-axis direction is the horizontal direction and is the left-right direction in FIG. 2. The Z1-axis direction corresponds to the axis direction of the first spindle 31. The first spindle 31 includes a first chuck such as a collet chuck. The first spindle 31 releasably grips, with the first chuck, a long rod-shaped workpiece W inserted into the first spindle. The first spindle 31 is rotatable about a first spindle axis CL1 while gripping the workpiece W. The direction of the first spindle axis CL1 coincides with the Z1-axis direction. The first spindle 31 is provided with a first spindle motor (not illustrated) such as a built-in motor. As the first spindle motor rotates in response to a command from the control apparatus 2, the first spindle 31 rotates about the first spindle axis CL1. As a result, the workpiece W gripped by the first spindle 31 rotates about the first spindle axis CL1.

The guide bush 4 is fastened, via a guide bush support 41, to the leg which is a base of the NC lathe 1. An end surface of the guide bush 4 opposite to the side on which the first spindle 31 is disposed is exposed to the inside of the machining chamber 11. The guide bush 4 supports a front end-side portion of the workpiece W, which penetrates the first spindle 31, in such a way that the workpiece is slidable in the Z1-axis direction. The portion of this guide bush 4 that supports the workpiece W is rotatable about the first spindle axis CL1 in sync with the first spindle 31. That is, the first spindle axis CL1 is also a rotary axis of a portion of the workpiece W supported by the guide bush 4. Since the guide bush 4 suppresses the bending of the workpiece W during machining, particularly the elongated workpiece W can be machined with high precision.

The first tool post 5 is movable in an X1-axis direction that is orthogonal to the Z1-axis direction and aligned with the horizontal direction, and a Y1-axis direction that is aligned with the vertical direction. In FIG. 2, the vertical direction is the X1-axis direction, and the direction that is orthogonal to the sheet is the Y1-axis direction. A tool T1 that is configured to machine the workpiece W is attached to the first tool post 5. FIG. 2 illustrates a state in which the tool T1 is attached to the first tool post 5. This tool T1 is disposed in the machining chamber 11. Multiple types of tools T1 including a tool for machining the outer diameter, a tool for cut off, and the like are attached to the first tool post 5, so as to be arranged in the Y1-axis direction. Any tool T1 is selected from the multiple types of tools T1 by moving the first tool post 5 in the Y1-axis direction. Then, the selected tool T1 cuts into the workpiece W gripped by the first spindle 31 and the front end portion of the workpiece W is machined by moving the first tool post 5 in the X1-axis direction.

The second headstock 6 is disposed in the machining chamber 11. The second spindle 61 is mounted on the second headstock 6. The second headstock 6 is movable in an X2-axis direction and a Z2-axis direction together with the second spindle 61. The X2-axis direction is identical to the X1-axis direction described above, and the Z2-axis direction is identical to the Z1-axis direction described above. The Z2-axis direction corresponds to the axis direction of the second spindle 61. FIG. 2 illustrates a state in which the second spindle 61 is located at a position facing the first spindle 31 across the guide bush 4. At this position, a second spindle axis CL2 which is the rotational center of the second spindle is disposed on the same line as the first spindle axis CL1. The direction of the second spindle axis CL2 coincides with the Z2-axis direction. The front end portion of the workpiece W having been subjected to machining using the first spindle 31 and cut off by the tool for cut off is delivered to the second spindle 61. Hereinbelow, the front end portion of the workpiece W having been cut off and delivered to the second spindle 61 is referred to as a cut-off portion of the workpiece, and the workpiece W remaining on the first spindle 31 side is referred to as a workpiece. The second spindle 61 includes a second chuck such as a collet chuck. During cut off, the second spindle 61 releasably grips, with the second chuck, a portion of the workpiece W having a predetermined length from its front end. In addition, the second spindle 61 releasably grips, with the second chuck, the cut-off portion of the workpiece having been subjected to cut off and delivered from the first spindle 31. The second headstock 6 is provided with a second spindle motor such as a built-in motor. As the second spindle motor rotates in response to a command from the control apparatus 2, the second spindle 61 rotates about the second spindle axis CL2. As a result, the cut-off portion of the workpiece W gripped by the second spindle 61 rotates about the second spindle axis CL2.

The second tool post 7 is disposed in the machining chamber 11. The second tool post 7 is movable in a Y2-axis direction. The Y2-axis direction is identical to the Y1-axis direction described above. Multiple types of tools T2 such as a drill and an end mill for machining the cut-off portion of the workpiece gripped by the second spindle 61 are attached to the second tool post 7. FIG. 2 illustrates a state in which the tools T2 are attached to the second tool post 7. Although not illustrated in FIG. 2, the tools T2 are attached so as to be arranged not only in the X2-axis direction but also in the Y2-axis direction. Any tool T2 is selected from the tools T2 by moving the second headstock 6 in the X2-axis direction and moving the second tool post 7 in the Y2-axis direction. In addition, the cut-off end portion of the cut-off portion of the workpiece W2 gripped by the second spindle 61 is machined by moving the second headstock 6 in the Z2-axis direction.

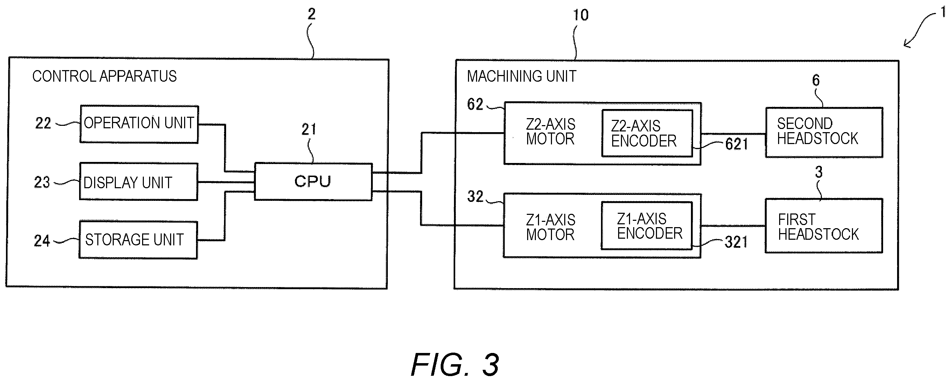

FIG. 3 is a block diagram illustrating a hardware configuration of the NC lathe illustrated in FIG. 1. Note that, FIG. 3 illustrates only a part of the hardware configuration of the NC lathe 1 highly associated with the present invention, and other configurations are not illustrated. The other configurations are not described either.

As illustrated in FIG. 3, the machining unit 10 includes a Z1-axis motor 32 and a Z2-axis motor 62 in addition to the first headstock 3 and the second headstock 6 described above. The Z1-axis motor 32 is a motor for moving the first headstock 3 in the Z1-axis direction in response to a command from the control apparatus 2. The Z1-axis motor 32 is provided with a Z1-axis encoder 321 that is configured to output a rotation direction, a rotation angle, and the like of the Z1-axis motor. The control apparatus 2 grasps the actual position of the first headstock 3 in the Z1-axis direction by the output from the Z1-axis encoder 321. The Z2-axis motor 62 is a motor for moving the second headstock 6 in the Z2-axis direction in response to a command from the control apparatus 2. The Z2-axis motor 62 is provided with a Z2-axis encoder 621 that is configured to output a rotation direction, a rotation angle, and the like of the Z2-axis motor. The control apparatus 2 grasps the actual position of the second headstock 6 in the Z2-axis direction by the output from the Z2-axis encoder 621.

The control apparatus 2 includes: a CPU 21; an operation unit 22; a display unit 23; and a storage unit 24. The CPU 21 is configured to execute processing according to a machining program stored in the storage unit 24. Note that, the machining program is a program in which various commands are listed. The CPU 21 sequentially executes processing corresponding to these commands. The operation unit 22 is constituted of multiple buttons, keys, and the like that accept an input operation by the user of the NC lathe 1. Note that, the operation unit 22 may be a touch panel integrated with the display unit 23. The user of the NC lathe 1 can store the machining program in the storage unit 24 using the operation unit 22 and an external computer. The user of the NC lathe 1 can also modify the machining program using the operation unit 22 and store the modified machining program in the storage unit 24. In addition, a threshold to be described later is stored in the storage unit 24. The display unit 23 is a display that displays thereon the machining program stored in the storage unit 24, various set values of the NC lathe 1, various information on the NC lathe 1, and the like.

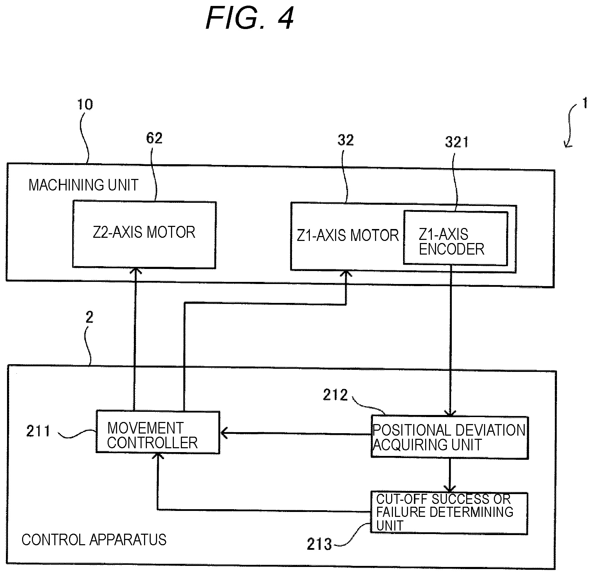

FIG. 4 is a functional block diagram illustrating a functional configuration of a control apparatus illustrated in FIG. 3. FIG. 4 also illustrates the machining unit 10 in a simplified way. Note that, FIG. 4 illustrates only a part of the functional configuration particularly highly associated with the present invention, and other functional configurations included in the control apparatus 2 are not illustrated. The other functional configurations are not described either.

As illustrated in FIG. 4, the control apparatus 2 includes a movement controller 211, a positional deviation acquiring unit 212, and a cut-off success or failure determining unit 213. The movement controller 211, the positional deviation acquiring unit 212, and the cut-off success or failure determining unit 213 are the functional configuration achieved by the CPU 21 and the storage unit 24 mainly illustrated in FIG. 3. The movement controller 211 is configured to control, for example, power supply to various motors such as the Z1-axis motor 32 and the Z2-axis motor 62. More specifically, the movement controller 211 controls the rotation speed and stopping angle of each motor by performing feedback control in response to output from the encoder included in the motor. Thus, the movement controller 211 moves the first headstock 3, the second headstock 6, and the like illustrated in FIG. 3 at a command speed specified in the machining program and stops them at a command position specified in the machining program. In addition, the movement controller 211 sometimes applies a retention torque to the Z1-axis motor 32, the Z2-axis motor 62, and the like in order to keep the stopped first headstock 3, second headstock 6, and the like at the stop position.

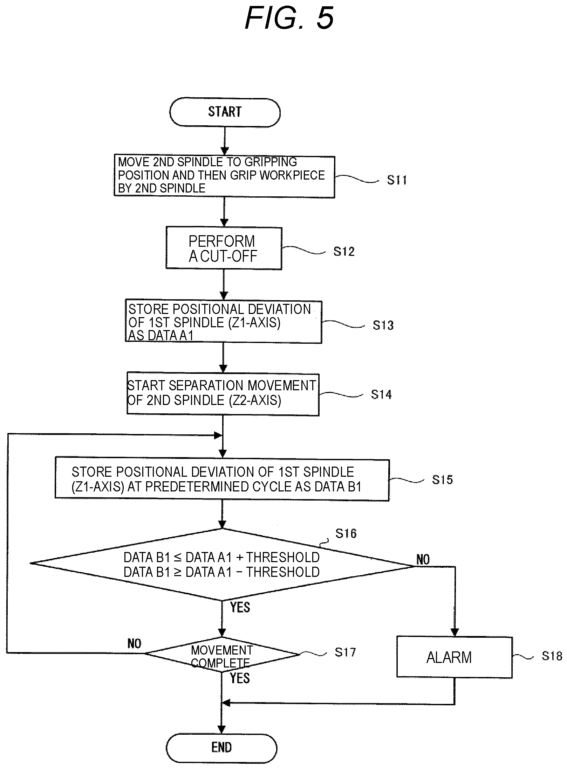

The positional deviation acquiring unit 212 is configured to acquire a positional deviation, which is a difference between the command position of the first headstock 3 (see FIG. 3) specified in the NC program and the actual position of the first headstock 3 according to an output from the Z1-axis encoder 321. According to this positional deviation, the movement controller 211 controls the Z1-axis motor 32 so as to decrease the positional deviation. Note that, although not illustrated, the movement controller 211 performs control according to the positional deviation on other motors such as the Z2-axis motor 62 as well. Meanwhile, if a cut-off tool is broken or worn significantly, a cut-off failure happens. The cut-off success or failure determining unit 213 is configured to determine a success or a failure of the cut-off according to the positional deviation of the first headstock 3 that is kept stopped after the cut-off is performed. Hereinbelow, a cut-off processing including the cut off and the determination operation will be described in detail using FIG. 5 with reference to FIGs. 2 to 4.

FIG. 5 is a flowchart illustrating an operation related to the cut-off processing of the NC lathe illustrated in FIG. 1.

Once the workpiece W has been subjected to machining using the first spindle 31 and the first tool post 5, the control apparatus 2 (the movement controller 211) moves the second spindle 61 to a position facing the first spindle 31. Then, the control apparatus 2 moves the second headstock 6 along the Z2-axis direction such that the second headstock 6 approaches the first spindle 31 until a portion of the workpiece W having a predetermined length from its front end is inserted into the second spindle 61. Next, the control apparatus 2 controls the second chuck, provided on the second spindle 61, to grip the portion of the workpiece W of the predetermined length inserted into the second spindle 61 (Step S11). The first spindle 31 and the second spindle 61 thereby grip the same workpiece W. Thereafter, while rotating the first spindle 31 and the second spindle 61 in sync with each other, the control apparatus 2 performs the cut-off by moving the first tool post 5 along the X1 axis to bring the cut-off tool to cut into the workpiece W. The front end portion of the workpiece W having been subjected to machining using the first spindle 31 is thereby cut off (Step S12). This Step S12 corresponds to an example of a cut-off step.

Once the cut-off in Step S12 is done, the control apparatus 2 controls the positional deviation acquiring unit 212 to acquire the positional deviation of the first spindle 31 in the Z1-axis direction at this time, and stores it in the storage unit 24 as data A1 indicating a reference deviation (Step S13). Next, the control apparatus 2 controls a separation movement of the second spindle 61 in a direction separating from the first spindle 31 (Step S14). Then, the control apparatus 2 controls the positional deviation acquiring unit 212 to acquire the positional deviation of the first spindle 31 in the Z1-axis direction for every four msec, for example, and stores the acquired positional deviation in the storage unit 24 as data B1 (Step S15). In addition, the cut-off success or failure determining unit 213 determines a success or a failure of the cut-off every time the data B 1 is stored (Step S 16). Specifically, the cut-off success or failure determining unit 213 determines whether the data B1 is equal to or smaller than a maximum value obtained by adding the threshold to the data A1, and equal to or larger than a minimum value obtained by deducting the threshold from the data A1. This Step S16 corresponds to an example of a cut-off success or failure determining step. Note that, as described previously, the threshold is a value stored in the storage unit 24 in advance. Then, in the case that the data B1 is equal to or smaller than the maximum value and equal to or larger than the minimum value (YES in Step S16), the cut-off success or failure determining unit 213 repeats the processing in Step S15 and Step S16 until the separation movement of the second spindle 61 is complete (NO loop in Step S17). When the separation movement of the second spindle 61 is complete (YES in Step S17), the cut-off success or failure determining unit 213 determines a success of the cut-off. The control apparatus 2 then ends the cut-off processing. Note that, the amount of movement of the second spindle 61 in Steps S14 to S17 is preferably a minute amount of movement, such as 0.1 mm, within such a range that whether the success or failure determination can be made.

On the other hand, in the case that the data B1 is larger than the maximum value or smaller than the minimum value before completion of the movement of the second spindle 61, the cut-off success or failure determining unit 213 determines a failure of the cut-off (NO in Step S16). In other words, when the positional deviation of the first spindle 31 exceeds a predetermined amount, the cut-off success or failure determining unit 213 determines that the first spindle 31 moves along with the second spindle 61 that moves in the direction separating from the first spindle 31 since the front end portion of the workpiece W is not severed from the workpiece. In the case that the cut-off success or failure determining unit 213 determines a failure of the cut-off, the control apparatus 2 forcibly terminates the movement of the second spindle 61 and displays, on the display unit 23, a message indicating that the cut off is unsuccessful (Step S18). These Steps S14 to S18 correspond to an example of a separation movement step. In other words, during the separation movement step, the cut-off success or failure determining step is executed multiple times.

The movement controller 211 executes control of applying a retention torque to the Z1-axis motor 32 so as to stop the first spindle 31 at a predetermined position during a period since the cut-off is started until the separation movement is complete. However, the movement controller 211 may perform control of reducing the retention torque on the Z1-axis motor 32 than usual or stopping the retention torque during a period since before or after Step S13 until the separation movement is complete. This makes the positional deviation of the first spindle 31 likely to occur, thus making it possible to determine the cut off failure more sensitively and rapidly.

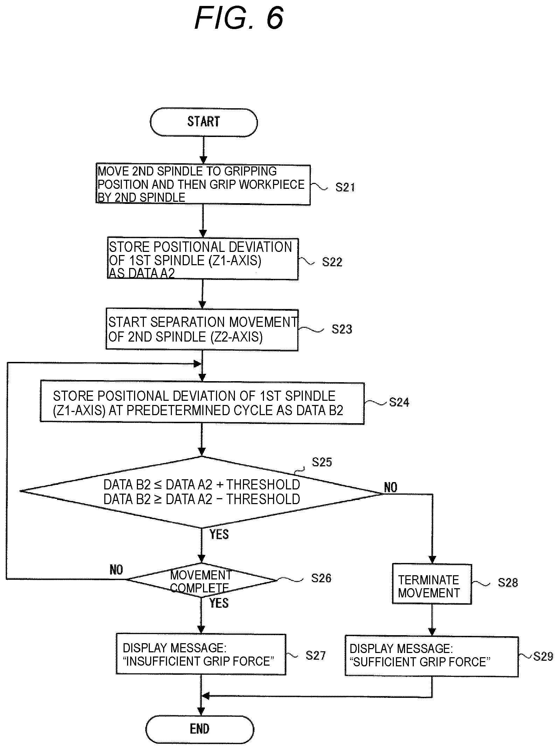

Next, a test cut-off to be executed during a setup operation will be described using FIG. 6 with reference to FIGs. 2 to 4. The setup operation is an operation to be performed prior to any machining such as a cutting and a cut-off when, for example, another workpiece W of different diameter is being used. FIG. 6 is a flowchart illustrating an operation related to the test cut-off by the NC lathe illustrated in FIG. 1. This test cut-off does not necessarily have to be executed; however, by executing this test, it is possible to easily determine whether the grip force of the second spindle 61 is adequate. In this test cut-off, the cut-off success or failure determining unit 213 works as a grip force preliminarily determining unit.

Prior to the test cut-off, while the first spindle 31 grips the workpiece W, the control apparatus 2 controls the workpiece W to protrude on the second spindle 61 side beyond the guide bush 4, and moves the second spindle 61 to a position facing the first spindle 31. Then, the test cut-off illustrated in FIG. 6 is started. First, the control apparatus 2 moves the second headstock 6 along the Z2-axis direction such that the second headstock 6 approaches the first spindle 31 until a portion of the workpiece W having a predetermined length from its front end is inserted into the second spindle 61. Next, the control apparatus 2 controls the second chuck, provided on the second spindle 61, to grip the portion of the workpiece W of the predetermined length inserted into the second spindle 61 (Step S21). The first spindle 31 and the second spindle 61 thereby grip the same workpiece W.

Then, the control apparatus 2 controls the positional deviation acquiring unit 212 to acquire the positional deviation of the first spindle 31 in the Z1-axis direction at this time, and stores it in the storage unit 24 as data A2 (Step S22). Next, the control apparatus 2 starts the separation movement of the second spindle 61 in the direction separating from the first spindle 31 (Step S23). Then, the control apparatus 2 controls the positional deviation acquiring unit 212 to acquire the positional deviation of the first spindle 31 in the Z1-axis direction for every four msec, for example, and stores it in the storage unit 24 as data B2 (Step S24). In addition, the cut-off success or failure determining unit 213 (the grip force preliminarily determining unit) determines, every time the data B2 is stored, whether the data B2 is equal to or smaller than a maximum value obtained by adding the threshold to the data A2, and equal to or larger than a minimum value obtained by deducting the threshold from the data A2 (Step S25). Note that, the threshold used here is preferably a value larger than the threshold used in Step S16 described above. This enables the grip force of the second spindle 61 to be set at an adequate grip force suitable not only for the cut-off success determination but also for machining. The threshold used in Step S16 described above is preferably set at a value as small as possible within a range not causing erroneous determination due to external factors. This makes it possible to determine a success or a failure of the cut-off more accurately. Then, in the case that the data B2 is equal to or smaller than the maximum value and equal to or larger than the minimum value (YES in Step S25), the cut-off success or failure determining unit 213 repeats the processing in Step S24 and Step S25 until the separation movement of the second spindle 61 is complete (NO loop in Step S26). Once the separation movement of the second spindle 61 is complete (YES in Step S26), the cut-off success or failure determining unit 213 determines that the grip force of the second spindle 61 is insufficient. Then, the control apparatus 2 displays, on the display unit 23, a message indicating that the grip force of the second spindle 61 is insufficient (Step S27). Note that, the amount of movement of the second spindle 61 in Steps S23 to S26 is preferably the same as the amount of movement in Steps S14 to S17 described above, but may be a larger amount of movement than that in Steps S14 to S17.

On the other hand, in the case that the data B2 becomes is larger than the maximum value or smaller than the minimum value before completion of the movement of the second spindle 61 (NO in Step S25), the cut-off success or failure determining unit 213 determines that the grip force of the second spindle 61 is sufficient. In other words, when the positional deviation of the first spindle 31 exceeds a predetermined range, it can be determined that no slippage occurs between the second chuck of the second spindle 61 and the workpiece W and that the second spindle 61 grips the workpiece W so tight enough to determine a success or a failure of the cut-off. Then, the control apparatus 2 forcibly terminates the movement of the second spindle 61 (Step S28) and displays, on the display unit 23, a message indicating that the grip force is sufficient (Step S29).

If the insufficiency of the grip force is displayed, the user of the NC lathe 1 adjusts the grip force of the second spindle 61 and executes the test cut-off illustrated in FIG. 6 again. Then, the user of the NC lathe 1 repeats the test cut-off and the adjustment of the grip force of the second spindle 61 until the grip force of the second spindle 61 becomes sufficient. This enables the grip force of the second spindle 61 to be set at an adequate grip force easily. In addition, this enables the cut-off success or failure determining unit 213 to make accurate determination in the cut-off processing illustrated in FIG. 5. Note that, the movement controller 211 stops the first spindle 31 at a predetermined position during the test cut-off illustrated in FIG. 6.

As has been described above, in this embodiment, after the cut-off is done, the second spindle 61 moves while the first spindle 31 is kept stopped. When the cut-off is successful, the positional deviation of the first spindle 31 basically does not change irrespective of the movement of the second spindle 61 since the machined portion has been severed from the workpiece W. Thus, according to the NC lathe 1 and the method for controlling the NC lathe 1 having been described above, by determining whether the cut-off is successful according to the positional deviation of the first spindle 31, it is possible to determine a success or a failure of the cut-off more precisely as compared to the conventional case according to the positional deviation of the second spindle 61. In addition, the positional deviation of the first spindle 31 is stored in Step S13 and, by using this positional deviation as the reference deviation, a failure of the cut-off can be determined when an amount of difference of the positional deviation from the reference deviation exceeds a predetermined amount. This can exclude an influence of any positional deviation caused before the start of the separation movement. Thus, it is possible to more precisely determine whether the cut-off is successful.

The present invention is not limited to the embodiment described above, and various modifications can be made within the scope of the appended claims. For example, an example of applying the present invention to the NC lathe 1 is indicated in the description of this embodiment, but the present invention may be applied to other machine tools, such as a machining center. In addition, by using the data A1 as the reference deviation, the cut-off success or failure determining unit 213 of this embodiment makes determination according to whether an amount of difference of the positional deviation from the reference deviation exceeds a predetermined amount. However, instead of using the data A1, the cut-off success or failure determining unit may make determination according to simply whether the data B1 or the absolute value of the data B1 exceeds the threshold.

Note that, a component included in only one of the modifications described above may be applied to another modification.

### REFERENCE SIGNS LIST

1 NC LATHE (MACHINE TOOL)
31 FIRST SPINDLE
61 SECOND SPINDLE
211 MOVEMENT CONTROLLER
213 CUT-OFF SUCCESS OR FAILURE DETERMINING UNIT
W WORKPIECE

## Claims

1. A machine tool comprising a first spindle capable of moving in an axis direction thereof and a second spindle capable of moving to a position facing the first spindle, the machine tool capable of performing a cut-off of a workpiece gripped by the first spindle and the second spindle and then performing a separation movement of the second spindle in a direction separating from the first spindle, the machine tool comprising:
a movement controlling unit adapted to perform a stop control of the first spindle at a command position of the first spindle during the separation movement of the second spindle; and
a cut-off success or failure determining unit adapted to monitor a positional deviation of the first spindle during the separation movement of the second spindle to determine a success or a failure of the cut-off, the positional deviation being a difference between the command position and an actual position of the first spindle.

2. The machine tool according to claim 1, wherein, the cut-off success or failure determining unit determines a failure of the cut-off when an amount of difference of the positional deviation from a reference deviation exceeds a predetermined amount, the reference deviation being the positional deviation of the first spindle immediately before the separation movement of the second spindle.

3. A method for controlling a machine tool provided with a first spindle capable of moving in an axis direction thereof and a second spindle capable of moving to a position facing the first spindle to grip a workpiece and moving in a direction separating from the first spindle, the method comprising:
performing a cut-off of the workpiece gripped by the first spindle and the second spindle;
performing a stop control of the first spindle at a command position after the cut-off and then performing a separation movement of the second spindle in the direction separating from the first spindle; and
monitoring a positional deviation of the first spindle during the separation movement of the second spindle and determining a success or a failure of the cut off according to the positional deviation, the positional deviation being a difference between the command position and an actual position of the first spindle.

4. The method for controlling a machine tool according to claim 3, further comprising a grip force preliminarily determining step to be executed before performing the cut-off, the grip force preliminarily determining step comprising stopping the first spindle and moving the second spindle in the direction separating from the first spindle while gripping the workpiece by the first spindle and the second spindle, monitoring another positional deviation of the first spindle, and determining whether or not a grip force of the second spindle is sufficient according to the positional deviation.
